(19) Europäisches Patentamt
European Patent Office
Office européen des brevets

(11) **EP 2 313 952 B1**

(12) **EUROPÄISCHE PATENTSCHRIFT**

(45) Veröffentlichungstag und Bekanntmachung des Hinweises auf die Patenterteilung:
**21.03.2018 Patentblatt 2018/12**

(21) Anmeldenummer: **09779640.3**

(22) Anmeldetag: **05.06.2009**

(51) Int Cl.:
*H02H 3/00* (2006.01)   *H02H 3/08* (2006.01)

(86) Internationale Anmeldenummer:
**PCT/EP2009/056914**

(87) Internationale Veröffentlichungsnummer:
**WO 2010/018018 (18.02.2010 Gazette 2010/07)**

(54) **ELEKTRISCHE ANLAGE**

ELECTRIC SYSTEM

INSTALLATION ÉLECTRIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **13.08.2008 AT 12692008**

(43) Veröffentlichungstag der Anmeldung:
**27.04.2011 Patentblatt 2011/17**

(73) Patentinhaber: **Siemens Aktiengesellschaft 80333 München (DE)**

(72) Erfinder:
• **HUMMEL, Alwin**
**90610 Winkelhaid (DE)**
• **SCHWEIGERT, Harald**
**A-1120 Wien (AT)**

(74) Vertreter: **Maier, Daniel Oliver et al**
**Siemens AG**
**Postfach 22 16 34**
**80506 München (DE)**

(56) Entgegenhaltungen:
DE-A1- 4 437 351   DE-A1- 10 359 736
US-A- 5 245 496   US-A- 5 512 883

## Beschreibung

Die Erfindung betrifft eine elektrische Anlage mit zumindest einem Verbraucher, welcher mittels einer Schutzeinrichtung abgesichert ist, wobei ein Auslöseparameter, insbesondere ein Auslösestrom, der Schutzeinrichtung einstellbar ist. Des Weiteren bezieht sich die Erfindung auf ein Verfahren zum Betreiben der elektrischen Anlage.

Insbesondere betrifft die Erfindung Automationsanlagen, welche einen Versorgungskreis mit fix verdrahtenden Verbrauchern umfasst. Typischerweise handelt es sich dabei um Produktionsanlagen, verfahrenstechnische Anlagen oder um sonstige industriell oder gewerblich nutzbare Großanlagen. Derartige Anlagen werden aufgrund unterschiedlicher Anforderungen nur sehr selten baugleich ausgeführt. Das bedeutet, dass jede Anlage unterschiedlich viele und unterschiedlich große Verbraucher umfasst. Um bei einem Defekt eines einzelnen Verbrauchers den Ausfall einer gesamten Anlage und damit beispielsweise Produktionsunterbrechungen zu vermeiden, muss jeder dieser Verbraucher mittels einer Schutzeinrichtung (Sicherung, Leistungsschutzschalter etc.) abgesichert sein.

In der Regel werden mehrere elektrische Verbraucher einer Anlage zu Gruppen zusammengefasst, wobei jede Gruppe mittels einer Schutzeinrichtung gegen Überlasten oder Kurzschlüsse abgesichert ist. Die Gruppen werden dabei so gewählt, dass die Abschaltung einer Gruppe nicht unbedingt zum Totalausfall der gesamten Anlage führt. Die Absicherung der Verbraucher bzw. der Verbrauchergruppen wird in der Regel durch einen Projektanten festgelegt und später von einem Monteur installiert bzw. eingestellt. Nach dem Stand der Technik kommen dabei vorwiegend einstellbare Schutzeinrichtungen zum Einsatz, um noch während einer Erstinbetriebnahme Anpassungen des Auslösestromes vornehmen zu können. Der Grund dafür liegt in dem Umstand, dass die tatsächliche Stromaufnahme der Verbraucher bzw. Verbrauchergruppen während der Projektierungsphase nur unzureichend ermittelbar ist. Beispielsweise erfolgt die Festlegung einzelner Ansteuerungsparameter oft erst nach Beendigung der Anlagenmontage, sodass im Vorfeld nicht klar ist, welche Verbraucher (Magnetventile, Stellmotoren, Schützspulen etc.) tatsächlich im laufenden Betrieb gleichzeitig eingeschaltet sein werden. Beispielhaft sind solche Schutzeinrichtungen aus US 5,512,883 oder US 5,245,496 bekannt. Während einer Erstinbetriebnahme werden in erster Linie zu gering dimensionierte Schutzeinrichtungen nachjustiert. Zu hoch dimensionierte Schutzeinrichtungen bleiben hingegen in der Regel unbemerkt, da während einer Erstinbetriebnahme nicht jeder Betriebszustand jedes einzelnen Verbrauchers bzw. jeder einzelnen Verbrauchergruppen beachtet und dabei der tatsächliche Stromverbrauch gemessen werden kann. Eine selektive Auslösung einzelner Schutzeinrichtungen ist nicht mehr gewährleistet, weil bei einem Kurzschluss oder einer Überlast mitunter nicht mehr die direkt vor dem betroffenen Verbraucher angeordnete - zu hoch dimensionierte - Schutzeinrichtung auslöst, sondern eine Vorsicherung. Damit werden unnötigerweise größere Anlagenbereiche spannungslos. Im schlimmsten Fall kann durch den Kurzschlussstrom die Leistungsfähigkeit einer Speisequelle (z.B. 24V Steuerspannung) überschritten werden, wodurch die gesamte Anlage ausfällt.

Neben der fehlenden Schutzfunktion ist zu beachten, dass zu hoch dimensionierte Schutzeinrichtungen keine Verbraucherüberwachung ermöglichen. Verbraucher können bereits in einem teildefekten Zustand sein, ohne dass die entsprechende Schutzeinrichtung ausgelöst wird. In einem teildefekten Zustand können Sensoren falsche Signale aufnehmen oder übermitteln bzw. Aktoren Stellfunktionen nicht vollständig ausführen (z.B. wird ein Ventil nicht vollständig geschlossen). Eine Auslösung erfolgt erst bei einem signifikanten Stromanstieg infolge eines Totalausfalls des Verbrauchers.

Der Erfindung liegt die Aufgabe zugrunde, für eine elektrische Anlage der eingangs genannten Art eine Verbesserung gegenüber dem Stand der Technik anzugeben. Insbesondere sollen die Ausfallsicherheit der Anlage erhöht und des Weiteren einzelne Verbraucher bzw. Verbrauchergruppen sinnvoll überwacht werden.

Erfindungsgemäß wird diese Aufgabe gelöst durch eine elektrische Anlage gemäß Anspruch 1 und ein Verfahren zum Betreiben dieser Anlage gemäß Anspruch 6.

Dabei ist eine Steuereinheit vorgesehen, welcher ein Strommesswert des von dem zumindest einem Verbraucher aufgenommenen Stromes zugeführt ist, wobei die Steuereinheit in Abhängigkeit des bisherigen Verlaufs des Strommesswertes einen neuen Grenzwert generiert, welcher der Schutzeinrichtung zur Einstellung eines Auslöseparameters vorgegeben ist. Die Steuereinheit erlaubt somit eine laufende Anpassung der Auslöseparameter, insbesondere des Auslösestromes an die tatsächlichen Betriebsverhältnisse. Zyklische Stromspitzen werden erkannt und bilden unter Berücksichtigung eines Sicherheitspolsters die Vorgabe zur Festlegung des in zeitlichen Abständen angepassten Grenzwertes zur automatischen Nachjustierung der Auslöseparameter. Als Schutzeinrichtung ist beispielsweise eine trennende Sicherung oder eine elektronische Sicherung vorgesehen, welche im Fehlerfall den Strom auf einen vorgegebenen Wert begrenzt.

Ein während der Erstinbetriebnahme nicht erkannter zu hoher Abschaltwert der Schutzeinrichtung wird während des Betriebs der Anlage durch Vorgabe des angepassten Grenzwertes korrigiert. Der Grenzwert leitet sich dabei direkt aus dem Verlauf der tatsächlich auftretenden Stromaufnahme des entsprechenden Verbrauchers ab. Damit ist sichergestellt, dass die Auslösebedingungen der Schutzeinrichtung immer an die gegeben Verhältnisse angepasst sind. Erfindungsgemäß ist der zumindest eine Verbraucher mittels einer geregelten getakteten Stromversorgung versorgt. Derartige Stromversorgungen verfügen üblicherweise über eine Strombegrenzung knapp oberhalb des Nennstromes. Deshalb ist es besonders wichtig, dass die Schutzeinrichtung zur selektiven Abschaltung eines betroffenen Verbrauchers nicht überdimensioniert ist. Es muss nämlich sichergestellt sein, dass eine ausreichende Kurzschlussleistung zur Auslösung der Schutzeinrichtung vorhanden ist. Bei einer zu hoch dimensionierten Schutzeinrichtung würde die getaktete Stromversorgung die Ausgangsspannung abregeln, ohne dass die Schutzeinrichtung den fehlerhaften Verbraucher vom restlichen Versorgungsnetz einer Anlage trennt.

Die Anpassung des Auslösestromes der Schutzeinrichtung an die tatsächliche Stromaufnahme eines an die Stromversorgung angeschlossenen Verbrauchers stellt sicher, dass bei einer Überlast infolge eines Defektes eine Abschaltung des Verbrauchers durch Auslösen der Schutzeinrichtung erfolgt. Das ist besonders vorteilhaft, wenn mehrere Verbraucher an dieselbe Stromversorgung angeschlossen sind. Dann ist beispielsweise jeder Verbraucher mit einer eigenen Schutzeinrichtung abgesichert, sodass ein defekter Verbraucher nicht zur Abschaltung aller angeschlossen Verbraucher führt. Es wird also vermieden, dass die Stromversorgung abregelt und damit die Versorgungsspannung einbricht, bevor die Schutzeinrichtung eines defekten Verbrauchers ausgelöst wird.

Um die Aufrechterhaltung der Versorgungsspannung (z.B. einer Steuerspannung) sicher zu stellen, können bei einem Einbruch derselben die Stromkreise weggeschaltet werden, welche einen aktuellen Stromfluss über dem historischen Mittelwert aufweisen. Als historischer Mittelwert ist beispielsweise jener Strom anzusehen, der sich als Mittelwert des letzten Beobachtungszeitintervalls (z.B. 1 Tag) oder als prozentueller Anteil des eingestellten Grenzwertes ergibt. Bei Überlastung der Stromversorgung würde die gesamte Anlage ausfallen. Daher ist es sinnvoll, alle Stromkreise abzuschalten, welche für einen Mehrverbrauch verantwortlich sein könnten.

Vorteilhafterweise umfasst die Steuereinheit einen ersten Speicher, welcher getriggert durch einen Zeitgeber Strommesswerte des Verbrauchers abspeichert. Auf diese Weise steht eine Historie der Strommesswerte zur Festlegung des neuen Grenzwertes für den Auslösestrom der Schutzeinrichtung zur Verfügung.

Des Weiteren ist es von Vorteil, wenn die Steuereinheit einen Mikrocontroller umfasst, welcher aus den im ersten Speicher abgespeicherten Strommesswerten in vorgegebenen Zeitintervallen einen Grenzwert generiert, welcher in einem zweiten Speicher abgespeichert und der Schutzeinrichtung zugeführt ist. Mittels eines einfach zu programmierenden Mikrocontrollers ist für jeden Betriebsfall eine geeignete Grenzwertbestimmung bereitgestellt. Es können also je nach Bedarf verschiedene Methoden zur Festlegung eines Grenzwertes für den Auslösestrom angewendet werden. Der im zweiten Speicher bis zur nächsten Grenzwertbestimmung abgespeicherte Grenzwert stellt dabei die Steuergröße zur Anpassung der Auslösebedingungen der mit der Steuereinheit verbunden Schutzeinrichtung dar.

In einer einfachen Ausprägung der Erfindung ist die Schutzeinrichtung als gesteuerte elektronische Schutzeinrichtung ausgeführt. Die Steuereinheit zur Festlegung des Grenzwertes ist dabei in die Steuerung der elektronischen Schutzeinrichtung integrierbar.

Betrieben wird die erfindungsgemäße elektrische Anlage mit einem Verfahren, bei dem nach Ablauf eines Beobachtungszeitintervalls der innerhalb des Beobachtungszeitintervalls aufgetretene maximale Strommesswert ermittelt wird und bei dem des Weiteren der maximale Strommesswert gemeinsam mit zumindest einem abgespeicherten maximalen Strommesswert eines vorangegangenen Beobachtungszeitintervalls oder eines vorgegebenen Startwertes (z.B. Nennstrom) bei Inbetriebnahme der Anlage herangezogen wird, um daraus den Grenzwert zur Einstellung des Auslösestromes zu ermitteln. Auf diese Weise ist sichergestellt, dass die Steuereinheit erst nach einem Beobachtungszeitintervall, welches einem durchlaufenen Betriebszyklus mit einer erkannten Stromverbrauchsspitze entspricht, den Auslösestrom der Schutzeinrichtung neu festlegt.

Dabei ist es von Vorteil, wenn der Steuereinheit eine Speisespannung des zumindest einen Verbrauchers zugeführt wird und dass der Grenzwert abhängig von der Höhe der Speisespannung in der Weise ermittelt wird, dass im laufenden Betrieb ein statischer Grenzwert vorgeben wird und dass bei einem Einschaltvorgang des zumindest einen Verbrauchers ein höherer dynamischer Grenzwert vorgegeben wird. Für den laufenden Betrieb wird demnach ein statischer Grenzwert vorgegeben, welcher typischerweise unterhalb des Einschaltstromes des Verbrauchers liegt. Für den Einschaltvorgang wird der Schutzeinrichtung ein dynamischer Grenzwert vorgegeben, der den Einschaltstrom des Verbrauchers berücksichtig. Das ist vor allem bei Verbrauchern mit hohen Einschaltströmen wichtig. Würde dabei der statische Grenzwert über dem Einschaltstrom liegen, könnte ein Fehlerstrom des Verbrauchers im laufenden Betrieb unerkannt bleiben.

Der Strommesswert wird günstigerweise vor einer Abspeicherung gefiltert, sodass vernachlässigbare Stromspitzen und Störungen bei der Ermittlung eines maximalen Strommesswertes ausgeblendet werden. Der Filter verhindert somit eine Reaktion der Grenzwertbestimmung auf Störungen und extrem kurze Lastspitzen, welche beispielsweise von Schalthandlungen ausgelöst werden können. Während dieser kurzen Lastspitzen würde eine elektronische Sicherung in den linearen oder Strombegrenzungsmodus wechseln Verlustleistung aufbauen.

In einer Ausprägung der Erfindung wird der Steuereinheit eine einstellbare Dauer des Beobachtungszeitintervalls vorgegeben. Das ist vor allem dann sinnvoll, wenn bekannte Betriebszyklen der elektrischen Anlage vorliegen. Die Dauer des Beobachtungszeitintervalls wird dann beispielsweise der Zyklusdauer gleichgesetzt oder länger als die Zyklusdauer eingestellt.

In einer anderen Ausprägung wird die Dauer eines Beobachtungszeitintervalls in der Weise festegelegt, dass zunächst der Verlauf der Strommesswerte zur Erkennung einer wiederkehrenden Abfolge von Verbrauchsspitzen und Verbrauchsminimums erfasst wird und dass im Anschluss daran ein Beobachtungszeitintervall so festgelegt wird, dass jeweils eine Verbrauchsspitze und jeweils ein Verbrauchsminimum innerhalb eines Beobachtungszeitintervalls liegt. Dieses Verfahren eignet sich insbesondere für elektrische Anlagen, die beispielsweise aufgrund besonderer Komplexität keine vorausbestimmbaren Zyklen durchlaufen. Durch die Erfassung einer Historie mit vergleichbaren Laststrommustern zeigt sich auf einfache Weise, welche Zyklen üblicherweise auftreten.

Eine weitere Methode sieht vor, dass die Dauer eines Beobachtungszeitintervalls durch das Auftreten einer vorgebbaren Anzahl von Überschreitungen eines bestimmten Schwellwertes des Strommesswertes und/oder eines Strom-Zeit-Integrals bestimmt wird. Eine solche Vorgehensweise ist beispielsweise für Anlagen sinnvoll, deren Verbraucher unregelmäßige Betriebszeiten aufweisen. Aufeinanderfolgende Beobachtungszeitintervalle dauern dann unterschiedlich lang, je nachdem, wie oft ein Stromschwellwert oder ein Schwellwert des Strom-Zeit-Integrals erreicht wird.

Zur Ermittlung eines Grenzwertes werden vorteilhafterweise die in den Beobachtungszeitintervallen ermittelten maximalen Strommesswerte mit einer Sicherheitsreserve beaufschlagt. Es besteht dann für das nächste Beobachtungszeitintervall ein Polster nach oben hin, sodass eine gewöhnliche Zunahme der Stromaufnahme (z.B. witterungsbedingt) zu keiner Auslösung der Schutzeinrichtung führt. Diese Sicherheitsreserve kann beispielsweise zwischen 1%-50% liegen.

Dabei ist es günstig, wenn die Sicherheitsreserve entsprechend einer vorgebbaren Kurve mit fortschreitender Betriebsdauer der elektrischen Anlage erhöht oder reduziert wird. Damit wird mit zunehmender Dauer der Stromverbrauchsbeobachtung der eingestellte Auslösestrom näher an die tatsächlichen Verhältnisse herangeführt.

Eine besonders einfache Möglichkeit zur Bestimmung eines Grenzwertes sieht vor, dass der Grenzwert als ein Mittelwert der innerhalb abgelaufener Beobachtungszeitintervalle ermittelten und mit der Sicherheitsreserve beaufschlagten maximalen Strommesswerte vorgegeben wird.

Eine andere einfache Bestimmung eines neuen Grenzwertes ist als Mittelwertbildung des im zuletzt abgelaufenen Beobachtungszeitintervall bestimmten maximalen Strommesswertes und des noch geltenden Grenzwertes gegeben. Optional können auch mehrere historische Grenzwerte zur Mittelwertbildung herangezogen werden, wodurch eine stärkere Gewichtung der zurückliegenden maximalen Strommesswerte erreicht wird.

Andererseits kann es sinnvoll sein, dass bei der Ermittlung des Grenzwertes der maximale Strommesswert des zuletzt abgelaufenen Beobachtungszeitintervalls stärker gewichtet wird als die Werte der davor abgelaufenen Beobachtungszeitintervalle. Auf diese Weise ist sichergestellt, dass laufende Veränderungen des Anlagenbetriebs zu einer entsprechenden Veränderung der Auslösebedingungen der Schutzeinrichtung führen. Eine weitere Möglichkeit besteht in der Veränderung der Gewichtung mit Zunahme der durchlaufenen Beobachtungszeitintervalle. Damit ist ein langsameres oder schnelleres Annähern an die aktuelle Situation erreichbar.

Dabei ist des Weiteren vorgesehen, dass bei einem Ansteigen der maximalen Strommesswerte innerhalb aufeinanderfolgender Beobachtungszeitintervalle eine stärkere Gewichtung des zuletzt aufgetretenen maximalen Strommesswertes erfolgt als bei einem Abfallen der maximalen Strommesswerte. Damit ist sichergestellt, dass beispielsweise geringfügige Erweiterungen einer Anlage und damit ein Anstieg des Stromverbrauchs innerhalb der Sicherheitsreserve nicht bei einer weiteren geringfügigen Stromverbrauchserhöhung sofort zu einer Auslösung der Schutzeinrichtung führt. Beim Anheben des Grenzwertes ist jedoch zu berücksichtigen, dass sicher zwischen einem gewöhnlichen Anstieg des Stromverbrauchs und einem Überstrom unterschieden werden muss. Dabei stellt die Steigung des Stromanstiegs das wesentliche Kriterium dar. Beispielsweise steigt der Stromverbrauch infolge verschmutzender Lüfter, schlechter Schmierung, jahreszeitlich bedingter Schwergängigkeit von Stellgliedern etc. langsam an. Bei einem abzuschaltenden Fehlerstrom kommt es hingegen in den meisten Fällen zu einer ausgeprägten Stromspitze oder einem Überstrom, welche in sehr kurzer Anstiegszeit auf einen Höchstwert ansteigt und dort verbleibt.

In einer vorteilhaften Ausprägung erfolgt die Festlegung eines dynamischen Grenzwertes in der Weise, dass während zulässiger Überströme der Verlauf des Strommesswertes erfasst wird und dass abhängig von mehreren derartigen Verläufen ein Verlauf für den dynamischen Grenzwert vorgegeben wird. Zulässige Überströme treten zum Beispiel auf, wenn Verbraucher zugeschaltet werden oder wenn während eines Einschaltvorgangs Kondensatoren aufgeladen werden. Als Auslösebedingung für die Schutzeinrichtung wird demnach eine Hüllkurve vorgegeben, welche durch Überlagerung mehrerer zulässiger Überstromverläufe unter Berücksichtung eines Sicherheitspolsters entsteht. Die Zulässigkeit eines Überstroms wird in der Regel durch die Dauer des auftretenden Überstromes und dessen Höhe in Bezug auf einen Nennstrom bestimmt.

Eine andere vorteilhafte Ausprägung sieht vor, dass als dynamischer Grenzwert ein Strom-Zeit-Integral vorgegeben wird, welches aus mehreren Verläufen des Strommesswertes während eines Einschaltvorgangs abgeleitet wird. Das Auslösekriterium für die Schutzeinrichtung wird dann ebenfalls durch ein Strom-Zeit-Integral eines auftretenden Überstromes bestimmt.

Von Vorteil ist es zudem, wenn der Grenzwert und/oder der Verlauf des Grenzwertes durch ein oberes Limit begrenzt sind, welches durch die Brandschutzbedingungen der Komponenten und/oder deren Leistungsfähigkeit vorgegeben ist, welche der Schutzeinrichtung nachgeordnet sind. Als Limit ist dann entweder ein Maximalwert oder ein bestimmter zeitlicher Verlauf vorgegeben.

Zur frühzeitigen Erkennung von Störfällen ist es von Vorteil, wenn für den Anstieg eines Grenzwertes ein kritischer Wert vorgegeben wird und wenn bei einem Übersteigen dieses kritischen Wertes ein Alarmsignal ausgelöst wird. Auf diese Weise kann zum Beispiel das Heißlaufen eines Lagers erkannt werden, bevor es zu einem Totalausfall bzw. zur Erreichung der Auslösebedingungen der entsprechenden Schutzeinrichtung kommt. Es soll dem Anwender frei stehen, erst einen Anstieg über ein Jahr (zur Ausblendung von Witterungseinflüssen) oder eine andere Zeitspanne zu wählen. Für die Gewährleistung der Anwendersicherheit kann es sinnvoll sein, nicht die langsam absinkenden Grenzwerte, sondern die tatsächlichen maximalen Messwerte pro Beobachtungszeitintervall heranzuziehen, um ein Alarmsignal auszulösen (z.B. Alarm bei Überschreitung eines vorgegebenen prozentuellen Anstiegs).

Ein verbessertes Verfahren sieht zudem vor, dass der Steuereinheit ein externes Signal zugeführt wird, mittels dem die Dauer der Beobachtungszeitintervalle anlassbezogen um einen vorgebbare Faktor verändert wird. Nach einer Anlagenabschaltung oder einem Tausch einer defekten Schutzeinrichtung können kürzere Beobachtungszeitintervalle als im laufenden Betrieb vorgegeben werden. Der Auslösestrom wird dann ausgehend von einem voreingestellten Ausgangswert schneller an die herrschenden Betriebsbedingungen angepasst.

Eine weitere Verbesserung sieht vor, dass der Steuereinheit ein Resetsignal zugeführt ist, mittels dem die Rücksetzung eines Grenzwertes auf einen Defaultwert durchgeführt wird. Das ist nach Betriebsunterbrechungen der elektrischen Anlage sinnvoll, um mit dem Defaultwert einen vollen Betriebszyklus zu durchlaufen, bevor der Schutzeinrichtung ein neuer Grenzwert vorgegeben wird. Der Defaultwert gibt beispielsweise der Schutzeinrichtung einen durch die Brandschutzbestimmungen der nachgeordneten Schaltungselemente festgelegten Abschaltstrom vor. Dabei kann das Resetsignal auch für einen längeren Zeitraum an der Steuereinheit anliegen, wodurch die Bildung eines neuen Grenzwertes für die Dauer dieses Zeitraums unterdrückt wird. Dies ist beispielsweise zur Fehlereingrenzung bei verschiedenen Schalthandlungen einzelner Verbraucher sinnvoll.

Dieser Defaultwert wird der Schutzeinrichtung auch bei einer erstmaligen Inbetriebnahme der elektrischen Anlage vorgegeben. Auf diese Weise ist sichergestellt, dass von Anfang an die durch die Brandschutzbestimmungen für die stromführenden Elemente der Anlage vorgegebenen Maximalwerte des Stromes bzw. des Strom-Zeit-Integrals nicht überschritten werden.

Schließlich ist es von Vorteil, wenn der aktuelle Grenzwert bzw. der statische und/oder der dynamische Grenzwert sowie der aktuelle Strommesswert und/der Verlauf des Strommesswertes mittels einer geeignete Anzeigeeinheit angezeigt und/oder über eine Schnittstelle ausgegebenen wird. Dabei sind beispielsweise die Grenzwerte der letzten Beobachtungszeitintervalle (z.B. 64 Tagesgrenzwerte) oder die Strommesswerte der letzten Millisekunden, welche z.B. in einem Ringspeicher abgespeichert sind, auslesbar. Auf diese Weise ist für ein Betriebspersonal der elektrischen Anlage jederzeit erkennbar, in welchem Zustand sich diese befindet.

Die Erfindung wird nachfolgend in beispielhafter Weise unter Bezugnahme auf die beigefügten Figuren erläutert. Es zeigen in schematischer Darstellung:

Fig. 1    Anordnung mit einstellbarer Schutzeinrichtung

Fig. 2    Anordnung mit strombegrenzender Schutzeinrichtung

Fig. 3    Anordnung mit dargestellter Schaltung der Steuereinheit

Fig. 4    Anordnung mit trennender Schutzeinrichtung

Fig. 5    Anordnung mit Parallelschaltung mehrerer mechanischer Schutzschalter

Fig. 6    Kurvenverläufe bei dynamischer Belastung

Fig. 7    Diagramm der maximalen Strommesswerte und daraus abgeleiteter Grenzwerte über der Zeit

Fig. 8    Ablaufschema

Fig. 9    Ablaufschema mit vorzeitiger Fehlererkennung

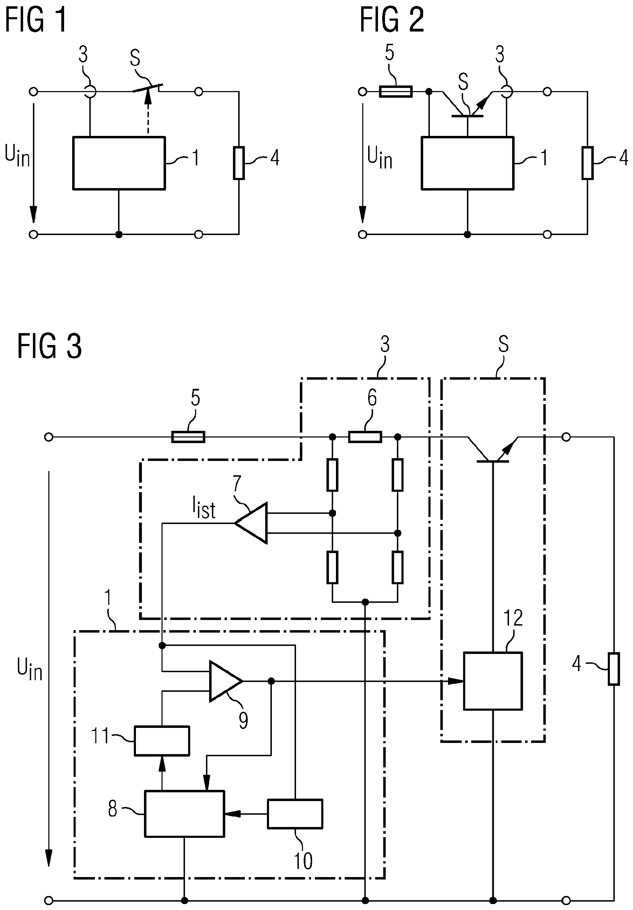

Figur 1 zeigt eine einfache erfindungsgemäße Ausführung. Ein Verbraucher 4 ist an eine Speisespannung $U_{in}$ angeschlossen. Dabei handelt es sich beispielsweise um eine Wechselspannung eines Versorgungsnetzes. Die Speisespannung $U_{in}$ kann aber auch eine Ausgangsgleichspannung eines Schaltnetzteils sein. Im Leistungspfad ist eine Schutzeinrichtung S angeordnet. Diese besteht im einfachsten Fall aus einem mechanischen Schalter, der mittels einer Steuereinheit 1 angesteuert wird.

Das Auslösen der Schutzeinrichtung S erfolgt aufgrund vorgegebener Auslösebedingungen, wobei die entsprechenden Auslöseparameter mittels Steuereinheit 1 einstellbar sind. Als Auslöseparameter kommen ein Wert für den Auslösestrom, eine maximal zulässige Dauer eines Überstromes, eine maximal zulässige Leitungstemperatur etc. in Frage. Eine Abschaltung oder Strombegrenzung des nachgeordneten Verbrauchers 4 erfolgt dann für den Fall, dass einer dieser Auslöseparameter überschritten wird.

Erfindungsgemäß wird zumindest ein Auslöseparameter der Schutzeinrichtung S nach Ablauf eines Beobachtungszeitintervalls neu eingestellt. Dazu wird der vom Verbraucher 4 aufgenommene Strom mittels einer Strommesseinrichtung 3 gemessen und als Strommesswert der Steuereinheit 1 zugeführt. Die Steuereinheit 1 umfasst geeignete Speichermittel zur Bildung einer Historie, die zunächst der Bestimmung eines Maximalwertes während eines abgelaufenen Beobachtungszeitintervalls dient.

Zu jedem Beobachtungszeitintervall wird also ein maximaler Strommesswert bestimmt und abgespeichert, um daraus einen Grenzwert zur Anpassung eines Auslöseparameters zu bilden. Im einfachsten Fall wird als Grenzwert der Mittelwert von zumindest zwei zuletzt bestimmten maximalen Strommesswerten herangezogen, wobei vorteilhafterweise eine Sicherheitsreserve vorzusehen ist. Bei Erstinbetriebnahme wird von einem Defaultwert (z.B. Nennstrom) ausgegangen.

Der maximal zulässige Auslösestrom $I_{aktion}$ als zu bestimmender Grenzwert errechnet sich dann nach dem Ablauf des n-ten Beobachtungszeitintervalls mit dem innerhalb eines Beobachtungszeitintervalls ermittelten maximalen Strommesswertes $\hat{I}$ z.B. wie foglt:

$$I_{aktion(n+1)} = [(\hat{I}_{(n)} + \hat{I}_{(n-1)}] / 2$$

Es ist sinnvoll, den zuletzt ermittelten maximalen Strommesswert mit einem Faktor X zu multiplizieren, um eine stärkere Gewichtung jüngerer Betriebsveränderungen zu erreichen:

$$I_{aktion(n+1)} = [(\hat{I}_{(n)} + \hat{I}_{(n-1)}*X] / (1+X)$$

Der so ermittelte Grenzwert wird der Schutzeinrichtung direkt oder entsprechend einer Skalierung als neuer Auslösestrom vorgegeben. Ist beispielsweise die Änderung des Auslösestromes einer Schutzeinrichtung nur in Zehnerschritten möglich, dann wird der Wert als Auslösestrom vorgegeben, der als nächster oberhalb des ermittelten Grenzwertes liegt.

Die richtige Einstellung eines Auslöseparameters hängt von der Dauer der Beobachtungszeitintervalle ab. Die Wahl der Beobachtungszeitintervalle richtet sich nach den Betriebszyklen der elektrischen Anlage. Ein Betriebszyklus bestimmt sich dabei durch ein Muster bei der Abfolge verschiedener Betriebszustände des Anlagenteils, welcher der Schutzeinrichtung nachgeschaltet ist, wobei dieses Muster in ähnlicher Form bei jedem Betriebszyklus von neuem auftritt. Ein solcher Anlagenteil kann entweder nur einen variabel betriebenen Verbraucher oder mehrere zeitlich versetzt betriebene Verbraucher umfassen. Das Muster bei der Abfolge verschiedener Betriebszustände ergibt sich beispielsweise durch wiederkehrende Verfahrensschritte oder durch einen vorgegebenen Schichtbetrieb einer Produktionsanlage.

Der Vorteil der vorliegenden Erfindung kommt dabei zum Tragen, wenn der zeitliche Verlauf der Stromaufnahme der mit der Schutzeinrichtung abgesicherten Verbraucher nicht exakt vorhersagbar oder der Aufwand zur Ermittlung zu hoch ist.

Figur 2 zeigt eine Anordnung mit einer als elektronische Sicherung ausgebildeten Schutzeinrichtung S. Dabei wird im Fehlerfall ein im Leistungspfad angeordneter Halbleiterschalter gepulst oder linear angesteuert und auf diese Weise der Strom auf einem vorgegebenen Maximalwert gehalten, unabhängig vom Verhalten der Last bzw. der Nennbelastung vor dem Eintreten des Fehlerfalls (z.B. Kurzschluss). Zur Erfüllung der Brandschutzbestimmungen wird in der Regel vorgeschrieben, dass der elektronischen Sicherung eine mechanische oder elektromechanische Sicherung 5 (z.B. Schutzschalter) vorgeschaltet ist, welche bei Versagen der elektronischen Sicherung in jedem Fall ausgelöst wird.

Eine beispielhafte Ausprägung der Steuereinheit 1 zeigt Figur 3. Der Laststrom wird mittels einer Strommesseinrichtung 3 erfasst, welche einen Shuntwiderstand 6 umfasst, mittels dem über einen Differentialverstärker 7 der Strommesswert $I_{ist}$ ermittelt wird. Dieser Strommesswert $I_{ist}$ ist einerseits einem Komparator 9 und andererseits über einen Analog-Digital-Wandler 10 einem Mikrocontroller 8 zugeführt. Der Komparator 9 vergleicht den Strommesswert $I_{ist}$ mit einem Referenzwert, welcher mittels Mikrocontroller 8 generiert und über einen Digital-Analog-Wandler 11 an den Komparator 9 weitergeben wird.

Der Ausgang des Komparators 9 ist einerseits mit dem Mikrocontroller 8 zur Bestimmung eines Beobachtungszeitintervalls und andererseits mit einer Gateansteuerung 12 zur gepulsten oder linearen Ansteuerung des Halbleiterschalters der Schutzeinrichtung S verbunden.

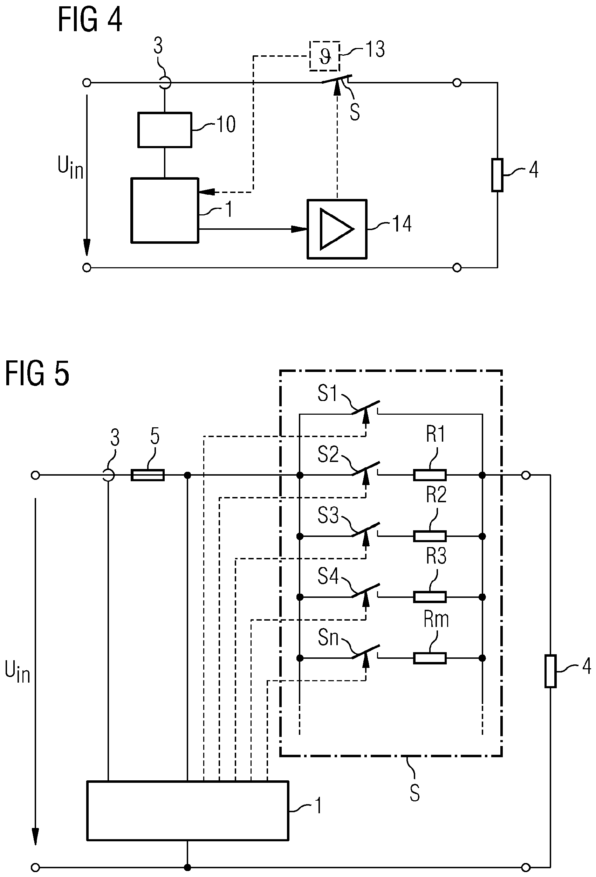

Eine vereinfachte Anordnung ist in Figur 4 dargestellt. Die als Mikrocontroller ausgebildete Steuereinheit 1 empfängt über einen Analog-Digital-Wandler 10 den Messwert einer Strommesseinrichtung 3. Im Falle einer Überschreitung des aktuellen Auslöseparameters wird vom Mikrocontroller ein Auslösesignal über einen Signalverstärker 14 an das Schaltelement der Schutzeinrichtung S übertragen. Bei Verwendung eines mechanischen Schaltelements erfolgt eine Trennung des schadhaften Verbrauchers 4 von der Speisespannung $U_{in}$. Ein elektronischer Schalter kann zur Begrenzung eines Überstromes genutzt werden.

Optional ist der Steuereinheit 1 ein Temperaturwert $\vartheta$ zugeführt, welcher eine kritische Leitungstemperatur signalisiert und mittels eines Temperaturfühlers 13 ermittelt wird. Der Temperaturwert $\vartheta$ wird beispielsweise als weiterer Auslöseparameter oder zur Bestimmung der momentanen Belastung in Bezug auf die höchst zulässige Belastung im Hinblick auf die Brandschutzbestimmungen genutzt.

Eine weitere Möglichkeit, mittels der Schutzeinrichtung S einen Überlaststrom zu begrenzen ist in Figur 5 dargestellt. Dabei sind im Leistungspfad mehrere Schalter S1..Sn parallel geschaltet. Über einen ersten Schalter S1 fließt im Normalbetrieb der Laststrom. In Serie zu den übrigen Schaltern S2..Sn ist jeweils ein Widerstand R1..Rm angeordnet. Jeder Schalter S1..Sn wird mittels der Steuereinheit 1 angesteuert. Im Falle eines fehlerhaften Verbrauchers 4 wird der erste Schalter S1 geöffnet die einer oder mehrere der übrigen Schalter geschlossen. Die Werte der Widerstände W1..Wm sind dabei beispielsweise binär gestuft, sodass eine stabile Begrenzung des Überstromes durch Schließen der entsprechenden Schalter S2..Sn erfolgt. Wenn die Schalter S1..S2 als Halbleiterelemente ausgeführt sind, ist aus Brandschutzgründen eine zusätzliche Schmelzsicherung 5 im Leistungspfad vorzusehen.

Die Auslösung einer Schutzeinrichtung S erfolgt durch Überschreitung eines statischen oder eines dynamischen Grenzwertes des Auslösestrom. Eine Überschreitung des dynamischen Grenzwertes wird durch den Verlauf eines kurzzeitigen Überstromes bestimmt und wird in der Regel mittels eines Strom-Zeit-Integrals festgestellt.

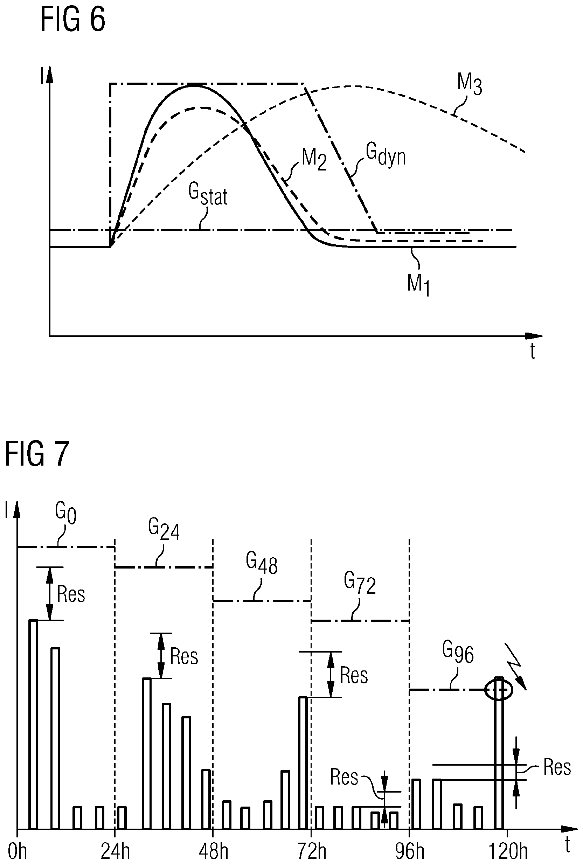

Kurzzeitige Überströme über den statischen Grenzwert des Auslösestromes sollen toleriert werden, da diese oft bei Einschaltvorgängen von Verbrauchern auftreten. Figur 6 zeigt verschiedene Verläufe des Stromes während eines Einschaltvorgangs. Der statische Grenzwert $G_{stat}$ bestimmt den Auslösestrom im laufenden Betrieb. Der dynamische Grenzwert $G_{dyn}$ ist als Hüllkurve über tolerierbare Verläufe $M_1$, $M_2$ eines Einschaltstromes angegeben. Die tolerierbaren Verläufe $M_1$, $M_2$ übersteigen zu keinem Zeitpunkt den Verlauf des dynamischen Grenzwertes $G_{dyn}$. Bei einem weiteren dargestellten Verlauf $M_3$ eines Einschaltstromes wird sowohl der statische Grenzwert $G_{stat}$ für eine längere Zeit als erlaubt überschritten, als auch die Strom-Zeit-Fläche des dynamischen Grenzwertes $G_{dyn}$ überschritten; die Schutzeinrichtung S wird ausgelöst.

Neben der beschriebenen Einstellung des statischen Grenzwertes $G_{stat}$ ist auch vorgesehen, dass der dynamische Grenzwert $G_{dyn}$ den tatsächlichen Betriebsverhältnissen der elektrischen Anlage angepasst wird. Dabei wird der Schutzeinrichtung S zunächst ein Defaultwert vorgegeben, der die maximal tolerierbaren Überspannungen bei der Erstinbetriebnahme berücksichtigt. Dieser Defaultwert entspricht z.B. dem maximalen Strombegrenzungsvermögen einer elektronischen Begrenzung oder dem $I^2t$-Wert eines empfindlichen Verbrauchers.

Während eines Beobachtungszeitintervalls wird wie oben beschrieben die Stromaufnahme des Verbrauchers 4 bzw. der Verbrauchergruppe gemessen und ausgewertet. Dabei wird mittels Steuereinheit 1 zusätzlich die Speisespannung $U_{in}$ überwacht, wobei ein Einschaltvorgang durch ein Absinken der Speisespannung $U_{in}$ erkannt wird. Zur Bestimmung des statischen Grenzwertes $G_{stat}$ werden die tolerierbaren Überspannungen während eines Einschaltvorgangs mittels eines geeigneten Filters (analog oder digital) ausgeblendet. Bei der Bildung der maximalen Strommesswerte eines Beobachtungszeitintervalls bleiben diese Störspitzen demnach unberücksichtigt. Zur Anpassung des dynamischen Grenzwertes $G_{dyn}$ an die tatsächlichen Betriebsverhältnisse werden hingegen nur die tolerierbaren Überstromverläufe herangezogen. Dabei werden beispielsweise während eines oder mehrerer Beobachtungszeitintervalle Verläufe von kurzzeitigen Überströmen abgespeichert und daraus eine Hüllkurve gebildet, wobei eine Sicherheitsreserve vorzusehen ist. Der auf diese Weise bestimmte dynamische Grenzwert $G_{dyn}$ darf dabei nicht über die Default-Einstellung hinausgehen, da diese das Limit für die Erfüllung der Brandschutzerfordernisse darstellt.

Zur Bestimmung eines Auslösefalls der Schutzeinrichtung S wird dann entweder laufend der Verlauf des Laststromes mit dem Hüllkurvenverlauf des eingestellten dynamischen Grenzwerts $G_{dyn}$ verglichen, oder es wird laufend ein Strom-Zeit-Integral des Laststromes gebildet und mit einem als Strom-Zeit-Integral ausgedrückten dynamischen Grenzwert $G_{dyn}$ verglichen.

Eine beispielhafte Ermittlung eines statischen Grenzwertes $G_{stat}$ ist in Figur 7 dargestellt, wobei der Laststrom I über der Betriebszeit t aufgetragen ist. Die Betriebszyklen der entsprechenden elektrischen Anlage folgen dabei einem fixen Tagesrhythmus, d.h. die Stromverbrauchsmuster wiederholen sich in ähnlicher Weise alle 24 Stunden. Dem entsprechend ist ein Beobachtungszeitintervall mit 24 Stunden festgelegt. Bei einer Inbetriebnahme ist zunächst ein Default-Grenzwert $G_0$ eingestellt.

Bei elektrischen Anlagen, die keinen vorhersagbaren Betriebszyklus aufweisen, wird nach Inbetriebsetzung so lange der Default-Grenzwert $G_0$ beibehalten, bis sich aus der Aufzeichnung des Strommesswertes ein sich annähernd wiederholendes Muster des Laststromverlaufs zeigt. Dazu werden insbesondere Strommaximal- und Stromminimalwerte ausgewertet, um daraus Betriebszyklen abzuleiten. Die Beobachtungszeitintervalle für die weitere Bestimmung der Grenzwerte werden dann entsprechend dieser Betriebszyklen festgelegt. Falls sich über einen längeren Zeitraum hinweg kein Muster des Stromverbrauchs erkennen lässt, wird als Beobachtungszeitintervall zur Bestimmung eines neuen Grenzwertes eine ausreichende Dauer (definiert als Defaultwert) festgelegt, beispielsweise eine Woche.

Nach Ablauf eines festgelegten Beobachtungszeitintervalls wird der maximale Strommesswert, der während dieses Beobachtungszeitintervalls aufgetreten ist, ermittelt und mit einer Sicherheitsreserve Res beaufschlagt. Der auf diese Weise gebildete Wert wird der Schutzeinrichtung als erster angepasster Grenzwert $G_{24}$ vorgegeben. Während des nachfolgenden Beobachtungszeitintervalls bildet dieser Grenzwert $G_{24}$ den Auslösestrom der Schutzeinrichtung S.

Aus der Aufzeichnung des Laststromes im zweiten Beobachtungszeitintervall wird nach Ablauf des Beobachtungszeitintervalls der neue maximale Strommesswert ermittelt, welcher wiederum mit einer Sicherheitsreserve Res beaufschlagt wird. Der neue Grenzwert $G_{48}$ bestimmt sich dann als Mittelwert diese mit der Sicherheitsreserve Res beaufschlagten maximalen Strommesswertes und des noch geltenden Grenzwertes $G_{24}$. Dabei kann eine Gewichtung vorgenommen werden, um z.B. die zuletzt herrschenden Betriebszustände stärker zu berücksichtigen.

In der gleichen Weise werden nach Ablauf der darauffolgenden zwei Beobachtungszeitintervalle die Grenzwerte $G_{72}$, $G_{96}$ gebildet. Während des fünften Beobachtungszeitintervalls gilt der zuletzt ermittelte Grenzwert $G_{96}$. Kurz vor 120h in Figur 7 tritt ein Laststrom auf, der über diesem Grenzwert $G_{96}$ liegt und zu einer Aktivierung der Schutzeinrichtung S führt.

Dabei kann es durchaus vorkommen, dass aufgrund der Anpassung der Grenzwerte an die laufenden Betriebsbedingungen ein Fehlerfall auftritt, der in vergangenen Beobachtungszeitintervallen aufgrund damals anderer Betriebsbedingungen zu keinem Auslösen der Schutzeinrichtung S geführt hätte. Das Beispiel zeigt somit deutlich, dass eine Schutzeinrichtung, deren Auslösebedingungen nicht an die laufenden Betriebsbedingungen angepasst werden, mit der Zeit zu groß dimensioniert ist und bei einem Defekt nicht auslöst.

Ein Strommesswert, welcher zur Auslösung der Schutzeinrichtung S führt, wird bei der weiteren Bildung eines maximalen Strommesswertes eines Beobachtungszeitintervalls ausgeblendet. Nach Behebung eines aufgetretenen Fehlers und erneuten Inbetriebnahme werden demnach der zuletzt gültige Grenzwert und der zuletzt ermittelte maximale Strommesswert ohne Berücksichtigung des Fehlerstromes zur Ermittlung des nächsten Grenzwertes herangezogen. Alternativ dazu kann der Schutzeinrichtung S nach erneuter Inbetriebnahme ein Default-Grenzwert vorgegeben werden und die Ermittlung der nachfolgenden Grenzwerte startet ausgehend von diesem Default-Grenzwert.

Durch eine geeignete Dauer der Beobachtungszeitintervalle, die geeignete Wahl der Sicherheitsreserven und der Gewichtung bei der Mittelwertbildung kann vermieden werden, dass Grenzwerte zu schnell abgesenkt oder zu langsam angehoben werden. Ein zu schnelles Absenken oder ein zu langsames Anheben der Grenzwerte würde bewirken, dass es aufgrund gewöhnlicher betriebsbedingter Stromanstiege zu einer Auslösung der Sicherheitseinrichtung S kommt. Dabei ist vor allem zu berücksichtigen, dass bei steigenden Stromverbrauchen, welche z.B. aufgrund unkritischer Verschleißerscheinungen oder aufgrund von Betriebsänderungen entstehen, eine ausreichend schnelle Anhebung der Grenzwerte durch entsprechende Gewichtung der jüngsten Strommesswerte erfolgt.

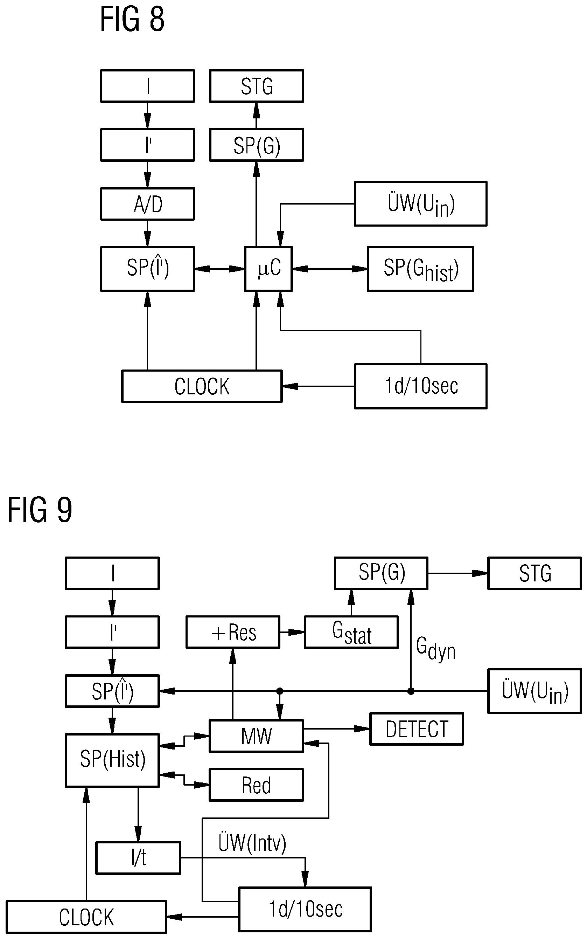

Figur 8 zeigt ein beispielhaftes Signalschema der Steuereinheit 1. Zunächst wird der Laststrom I mittels einer Strommesseinrichtung 3 erfasst. Mittels eines Filters werden Störungen und tolerierbare dynamische Lastspitzen ausgeblendet und das auf diese Weise gefilterte Strommesssignal I' einem Analog-Digital-Wandler A/D zugeführt. Die Zeitkonstante des Filters orientiert sich dabei an der Zeit, die z.B. eine elektronische Sicherung im aktiven Strombegrenzungsmode laufen kann (U*I am Leistungstransistor der Sicherung; z.B. 20-50ms).

In einem Höchstwertspeicher SP($\hat{\text{I}}$') werden die laufenden gefilterten Strommesswerte abgespeichert und stehen einem Mikrocontroller μC zur Bildung eines maximalen Strommesswertes zur Verfügung. Dabei bestimmt z.B. ein Zeitgeber CLOCK die Dauer eines Beobachtungszeitintervalls. Über einen entsprechenden Signalgeber 1d/10sec kann die Dauer des Beobachtungszeitintervalls umgestellt werden.

Nach Beendigung eines Beobachtungszeitintervalls wird mittels Mikrocontroller μC ein neuer Grenzwert aus dem aktuellen maximalen Strommesswert und dem noch gültigen Grenzwert errechnet. Dies erfolgt in der einfachsten Form durch Mittelwertbildung. Grenzwerte vergangener Beobachtungszeitintervalle sind in einem Historienspeicher SP($G_{hist}$) gespeichert und stehen dem Mikrocontroller μC zur Verfügung.

Der neu ermittelte Grenzwert wird in einem Ausgabespeicher SP(G) abgespeichert und an die Steuerung STG der Schutzeinrichtung zur Anpassung eins Auslöseparameters weitergeleitet.

Dem Mikrocontroller μC ist des Weiteren das Signal einer Speisespannungsüberwachung ÜW($U_{in}$) zur Erkennung eines Einschaltvorgangs zugeführt. Der dynamische Einschaltstrom des angeschlossenen Verbrauchers bzw. der Verbrauchergruppe wird bei der Ermittlung des maximalen Strommesswertes ausgeblendet. Zudem wird während eines Einschaltvorgangs ein dynamischer Grenzwert als Auslöseparameter der Schutzeinrichtung S herangezogen. Weiters wird bei Einbruch der Speisespannung unter einen Defaultwert (z.B. 85% des Nennstromes) ein Kanal bzw. Stromkreis abgeschaltet, wenn ein historisch gesehen ungewöhnlich hoher Strom fließt.

Das in Figur 9 dargestellte Signalschema berücksichtigt neben der laufenden Grenzwertanpassung einen langsamen Stromanstieg eines Verbrauchers, welcher einen schleichenden Defekt aufweist.

Dabei werden dem Höchstwertspeicher SP($\hat{\text{I}}$') einerseits die gefilterten Strommesswerte und andererseits mittels Speisespannungsüberwachung ÜW($U_{in}$) ein Signal zur Ausblendung von Einschaltströmen zugeführt. In einem Historienspeicher SP(Hist) werden einerseits die Strommesswerte und andererseits die Grenzwerte der abgelaufenen Beobachtungszeitintervalle abgespeichert. Ein Mittelwertbilder MW greift auf den Historienspeicher SP(Hist) zu und ermittelt aus den abgespeicherten Werten einen neuen Grenzwert. Dabei ist der Historienspeicher SP(Hist) mit einer Datenreduktionseinrichtung Red zur Verwaltung der abgespeicherten Werte verbunden.

Die im Historienspeicher SP(Hist) abgespeicherten Werte sind einer Auswerteeinheit I/t zur Ermittlung des Last-Zeitverhaltens zugeführt. Es werden die Zeitabstände überprüft, innerhalb derer hohe Stromverbrauche zu verzeichnen sind. Auf Basis dieser Auswertung können mittels eines entsprechenden Signalgebers 1d/10sec die Beobachtungszeitintervalle angepasst werden (wenn z.B. 24h als Mittelwertzeitraum nicht ausreicht).

Das Beobachtungszeitintervall kann auch von einem Bedienpersonal verändert werden, wobei optional eine automatische Rücksetzung erfolgen kann. Dies ist zum Beispiel zur Festlegung eines Lernzeitraums mit kurzen Beobachtungszeitintervallen sinnvoll.

Die gebildeten neuen Grenzwerte werden einem Detektor DETECT zur Erkennung eines langsamen Stromanstiegs zugeführt. Bei Erreichung eines vorgegebenen Schwellwertes wird ein Signal an eine Warneinrichtung abgegeben, welche dem Bedienpersonal signalisiert, dass ein schleichender Defekt vorliegt.

Während eines Einschaltvorgangs wird dem Ausgabespeicher SP(G) ein dynamischer Grenzwert $G_{dyn}$ vorgegeben, wohingegen im laufenden Betrieb der mit einem Sicherheitsfaktor Res beaufschlagte Mittelwert als statischer Grenzwert $G_{stat}$ vorliegt.

Abschließend sei bemerkt, dass zur Verringerung der Gefahr von Fehlauslösungen anstatt der maximalen Strommesswerte auch maximale Kurvenverläufe des Laststromes abgespeichert und zur Bildung von Grenzwerten herangezogen werden können. Das Bedeutet, dass bei jeder auftretenden Stromgrenzwertüberschreitung auch der Zeitverlauf mit früheren Zeitverläufen von Überströmen verglichen wird. Auf diese Weise lernt die Steuereinheit anlagentypische Stromverbrauchsmuster, wobei nur eine massive Überschreitung dieser Muster eine Auslösung herbeiführt.

## Patentansprüche

1. Elektrische Anlage mit zumindest einem Verbraucher (4), welcher mittels einer Schutzeinrichtung (S) abgesichert ist, wobei ein Auslöseparameter, insbesondere ein Auslösestrom, der Schutzeinrichtung (S) einstellbar ist, wobei eine Steuereinheit (1) vorgesehen ist, welcher ein Strommesswert des von dem zumindest einen Verbraucher (4) aufgenommenen Stromes zugeführt ist und dass die Steuereinheit (1) in Abhängigkeit des Verlaufs des Strommesswertes einen Grenzwert (Gstat, $G_{dyn}$) generiert, welcher der Schutzeinrichtung (S) zur Einstellung eines Auslöseparameters vorgegeben ist, **dadurch gekennzeichnet, dass** der zumindest eine Verbraucher (4) mittels einer geregelten getakteten Stromversorgung versorgt ist und dass der vorgegebene Auslöseparameter im Fehlerfall ein Auslösen der Schutzeinrichtung bewirkt, bevor die taktende Stromversorgung in eine Strombegrenzung übergeht.

2. Elektrische Anlage nach Anspruch 1, **dadurch gekennzeichnet, dass** die Steuereinheit (1) einen ersten Speicher umfasst, welcher getriggert durch einen Zeitgeber Strommesswerte des Verbrauchers (4) abspeichert.

3. Elektrische Anlage nach Anspruch 2, **dadurch gekennzeichnet, dass** die Steuereinheit (1) einen Mikrocontroller (8, μC) umfasst, welcher aus den im ersten Speicher abgespeicherten Strommesswerten in vorgegebenen Zeitintervallen einen Grenzwert ($G_{stat}$, $G_{dyn}$) generiert, Zeitintervallen einen Grenzwert ($G_{stat}$, $G_{dyn}$) generiert, welcher in einem zweiten Speicher abgespeichert und der Schutzeinrichtung (S) zugeführt ist.

4. Elektrische Anlage nach einem der Ansprüche 1 bis 3, **dadurch gekennzeichnet, dass** die Schutzeinrichtung (S) als gesteuerte elektronische Schutzeinrichtung ausgeführt ist.

5. Verfahren zum Betreiben einer elektrischen Anlage nach einem der Ansprüche 1 bis 4, **dadurch gekennzeichnet, dass** nach Ablauf eines Beobachtungszeitintervalls der innerhalb des Beobachtungszeitintervalls aufgetretene maximale Strommesswerte ($\hat{I}$) ermittelt wird und dass des Weiteren der maximale Strommesswert gemeinsam mit zumindest einem abgespeicherten maximalen Strommesswert ($\hat{I}$) eines vorangegangenen Beobachtungszeitintervalls herangezogen wird, um daraus den Grenzwerte ($G_{stat}$, $G_{dyn}$) zur Einstellung des Auslösestromes zu ermitteln.

6. Verfahren nach Anspruch 5, **dadurch gekennzeichet, dass** der Steuereinheit (1) eine Speisespannung ($U_{in}$) des zumindest einen Verbrauchers (4) zugeführt wird und dass der Grenzwert abhängig von der Höhe der Speisespannung ($U_{in}$) in der Weise ermittelt wird, dass im laufenden Betrieb ein statischer Grenzwert ($G_{stat}$) vorgeben wird und dass bei einem Einschaltvorgang des zumindest einen Verbrauchers (4) ein höherer dynamischer Grenzwert ($G_{dyn}$) vorgegeben wird.

7.  Verfahren nach Anspruch 5 oder 6, **dadurch gekennzeichnet, dass** der Strommesswert vor einer Abspeicherung gefiltert wird, damit vernachlässigbare Stromspitzen und Störungen bei der Ermittlung eines maximalen Strommess-wertes ($\hat{I}$) ausgeblendet werden.

8.  Verfahren nach einem der Ansprüche 5 bis 7, **dadurch gekennzeichnet, dass** der Steuereinheit (1) eine einstellbare Dauer des Beobachtungszeitintervalls vorgegeben wird.

9.  Verfahren nach einem der Ansprüche 5 bis 8, **dadurch gekennzeichnet, dass** die Dauer eines Beobachtungszei-tintervalls in der Weise festgelegt wird, dass zunächst der Verlauf der Strommesswerte zur Erkennung einer wiederkehrenden Abfolge von Verbrauchsspitzen und Verbrauchsminimums erfasst wird und dass im Anschluss daran ein Beobachtungszeitintervall so festgelegt wird, dass jeweils eine Verbrauchsspitze und jeweils ein Verbrauchsminimum innerhalb eines Beobachtungszeitintervalls liegt.

10. Verfahren nach einem der Ansprüche 5 bis 7, **dadurch gekennzeichnet, dass** die Dauer eines Beobachtungszeitintervalls durch das Auftreten einer vorgebbaren Anzahl von Überschreitungen eines bestimmten Schwellwertes des Strommesswertes und/oder eines Strom-Zeit-Integrals bestimmt wird.

11. Verfahren nach einem der Ansprüche 5 bis 10, **dadurch gekennzeichnet, dass** zur Bestimmung des Grenzwertes ($G_{stat}$, $G_{dyn}$) die in den Beobachtungszeitintervallen ermittelten maximalen Strommesswerte ($\hat{I}$) mit einer Sicher-heitsreserve (Res) beaufschlagt werden.

12. Verfahren nach Anspruch 11, **dadurch gekennzeichnet, dass** die Sicherheitsreserve (Res) entsprechend einer vorgebbaren Kurve mit fortschreitender Betriebsdauer der elektrischen Anlage erhöht oder reduziert wird.

13. Verfahren nach Anspruch 11 oder 12, **dadurch gekennzeichnet, dass** der Grenzwert ($G_{stat}$) als ein Mittelwert der innerhalb abgelaufener Beobachtungszeitintervalle ermittelten und mit der Sicherheitsreserve (Res) beaufschlagten maximalen Strommesswerten vorgegeben wird.

14. Verfahren nach Anspruch 11 oder 12, **dadurch gekennzeichnet, dass** ein neuer Grenzwert ($G_{stat}$) als ein Mittelwert des im zuletzt abgelaufenen Beobachtungszeitintervall bestimmten maximalen Strommesswertes und des noch geltenden Grenzwertes ermittelt wird.

15. Verfahren nach einem der Ansprüche 11 bis 14, **dadurch gekennzeichnet, dass** bei der Ermittlung des Grenzwertes ($G_{stat}$) der maximale Strommesswert des zuletzt abgelaufenen Beobachtungszeitintervalls stärker gewichtet wird als die Werte der davor abgelaufenen Beobachtungszeitintervalle.

16. Verfahren nach Anspruch 15, **dadurch gekennzeichnet, dass** bei einem Ansteigen der maximalen Strommesswerte ($G_{stat}$) innerhalb aufeinanderfolgender Beobachtungszeitintervalle eine stärkere Gewichtung des zuletzt aufgetretenen maximalen Strommesswertes erfolgt als bei einem Abfallen der maximalen Strommesswerte.

17. Verfahren nach einem der Ansprüche 6 bis 16, **dadurch gekennzeichnet, dass** während zulässiger Überströme der Verlauf des Strommesswertes erfasst wird und dass abhängig von mehreren derartigen Verläufen ein Verlauf für den dynamischen Grenzwert ($G_{dyn}$) vorgegeben wird.

18. Verfahren nach einem der Ansprüche 6 bis 17, **dadurch gekennzeichnet, dass** als dynamischer Grenzwerte ($G_{dyn}$) ein Strom-Zeit-Integral vorgegeben wird, welches aus mehreren Verläufen des Strommesswertes während eines Einschaltvorgangs abgeleitet wird.

19. Verfahren nach einem der Ansprüche 5 bis 18, **dadurch gekennzeichnet, dass** der Grenzwert ($G_{stat}$, $G_{dyn}$) und/oder der Verlauf des Grenzwertes ($G_{stat}$, $G_{dyn}$) durch ein oberes Limit begrenzt ist, welches durch die Brandschutzbedingungen der Komponenten und/oder deren Leistungsfähigkeit vorgegeben ist, welche der Schutzeinrichtung (S) nachgeordnet sind.

20. Verfahren nach einem der Ansprüche 5 bis 19, **dadurch gekennzeichnet, dass** für den Anstieg eines Grenzwertes ($G_{stat}$, $G_{dyn}$) ein kritischer Wert vorgegeben wird und dass bei einem Übersteigen dieses kritischen Wertes ein Alarmsignal ausgelöst wird.

21. Verfahren nach einem der Ansprüche 5 bis 20, **dadurch gekennzeichnet, dass** der Steuereinheit (1) ein externes Signal zugeführt wird, mittels dem die Dauer der Beobachtungszeitintervalle anlassbezogen verändert wird.

22. Verfahren nach einem der Ansprüche 5 bis 21, **dadurch gekennzeichnet, dass** der Steuereinheit (1) ein Resetsignal zugeführt ist, mittels dem die Rücksetzung eines Grenzwertes ($G_{stat}$, $G_{dyn}$) auf einen Defaultwert durchgeführt wird.

23. Verfahren nach einem der Ansprüche 5 bis 22, **dadurch gekennzeichnet, dass** der aktuelle Grenzwert ($G_{stat}$, $G_{dyn}$) bzw. der statische und/oder der dynamische Grenzwert sowie der aktuelle Strommesswert und/der Verlauf des Strommesswertes mittels einer geeignete Anzeigeeinheit angezeigt und/oder über eine Schnittstelle ausgegebenen wird.

**Claims**

1. Electrical system having at least one load (4) that is protected by means of a protective device (S), wherein a tripping parameter, in particular a tripping current, of the protective device (S) can be set, wherein a control unit (1) is provided to which a measured current value of the current consumed by the at least one load (4) is supplied and in that as a function of the characteristic curve of the measured current value the control unit (1) generates a limit value ($G_{stat}$, $G_{dyn}$) which is specified to the protective device (S) for the purpose of setting a tripping parameter, **characterised in that** the at least one load (4) is supplied by means of a regulated clocked power supply and **in that** in the event of a fault the specified tripping parameter initiates a tripping of the protective device before the clocked power supply changes to current limiting.

2. Electrical system according to claim 1, **characterised in that** the control unit (1) includes a first memory which, when triggered by a timer, stores measured current values of the load (4).

3. Electrical system according to claim 2, **characterised in that** the control unit (1) includes a microcontroller (8, $\mu$C) which at predefined time intervals generates a limit value ($G_{stat}$, $G_{dyn}$) from the measured current values stored in the first memory, which limit value is stored in a second memory and supplied to the protective device (S).

4. Electrical system according to one of claims 1 to 3, **characterised in that** the protective device (S) is implemented as a controlled electronic protective device.

5. Method for operating an electrical system according to one of claims 1 to 4, **characterised in that** after a monitoring time interval has elapsed the maximum measured current value ($\hat{I}$) that occurred within the monitoring time interval is determined and **in that** in addition the maximum measured current value is used together with at least one stored maximum measured current value ($\hat{I}$) of a preceding monitoring time interval in order to determine therefrom the limit value ($G_{stat}$, $G_{dyn}$) for setting the tripping current.

6. Method according to claim 5, **characterised in that** the control unit (1) is supplied with a feed voltage ($U_{in}$) of the at least one load (4) and **in that** the limit value is determined as a function of the level of the feed voltage ($U_{in}$) in such a way that a static limit value ($G_{stat}$) is specified in ongoing operation and that a higher dynamic limit value ($G_{dyn}$) is specified during a switch-on operation of the at least one load (4).

7. Method according to claim 5 or 6, **characterised in that** prior to being stored the measured current value is filtered so that insignificant current peaks and sources of interference are masked out during the determination of a maximum measured current value ($\hat{I}$).

8. Method according to one of claims 5 to 7, **characterised in that** an adjustable duration of the monitoring time interval is specified to the control unit (1).

9. Method according to one of claims 5 to 8, **characterised in that** the duration of a monitoring time interval is defined in such a way that initially the characteristic curve of the measured current values is recorded for the purpose of detecting a recurring sequence of consumption peaks and consumption minima and that following on therefrom a monitoring time interval is defined in such a way that one consumption peak and one consumption minimum fall within one monitoring time interval in each case.

10. Method according to one of claims 5 to 7, **characterised in that** the duration of a monitoring time interval is determined by the occurrence of a predefinable number of instances of a specific threshold value of the measured current value and/or of a current-time integral being exceeded.

11. Method according to one of claims 5 to 10, **characterised in that** in order to determine the limit value ($G_{stat}$, $G_{dyn}$) a safety margin (Res) is applied to the maximum measured current values ($\hat{I}$) determined in the monitoring time intervals.

12. Method according to claim 11, **characterised in that** the safety margin (Res) is increased or reduced according to a predefinable curve with increasing operating time of the electrical system.

13. Method according to claim 11 or 12, **characterised in that** the limit value ($G_{stat}$) is specified as an average of the maximum measured current values determined within elapsed monitoring time intervals and those to which the safety margin (Res) has been applied.

14. Method according to claim 11 or 12, **characterised in that** a new limit value ($G_{stat}$) is determined as an average of the maximum measured current value determined in the most recently elapsed monitoring time interval and the still valid limit value.

15. Method according to one of claims 11 to 14, **characterised in that** in the determination of the limit value ($G_{stat}$) the maximum measured current value of the most recently elapsed monitoring time interval is weighted more strongly than the values of the previously elapsed monitoring time intervals.

16. Method according to claim 15, **characterised in that** if there is an increase in the maximum measured current values ($G_{stat}$) within succeeding monitoring time intervals the maximum measured current value that occurred most recently is weighted more strongly than if there is a decrease in the maximum measured current values.

17. Method according to one of claims 6 to 16, **characterised in that** during permissible overcurrents the characteristic curve of the measured current value is recorded and **in that** a characteristic curve for the dynamic limit value ($G_{dyn}$) is specified as a function of a plurality of such characteristic curves.

18. Method according to one of claims 6 to 17, **characterised in that** a current-time integral which is derived from a plurality of characteristic curves of the measured current value during a switch-on operation is specified as the dynamic limit value ($G_{dyn}$).

19. Method according to one of claims 5 to 18, **characterised in that** the limit value ($G_{stat}$, $G_{dyn}$) and/or the characteristic curve of the limit value ($G_{stat}$, $G_{dyn}$) is limited by an upper limit which is predefined by the fire protection conditions applicable to the components which are disposed downstream of the protective device (S) and/or by their capacity.

20. Method according to one of claims 5 to 19, **characterised in that** a critical value is predefined for the increase in a limit value ($G_{stat}$, $G_{dyn}$) and **in that** an alarm signal is triggered if said critical value is exceeded.

21. Method according to one of claims 5 to 20, **characterised in that** the control unit (1) is supplied with an external signal by means of which the duration of the monitoring time intervals is modified on an event-related basis.

22. Method according to one of claims 5 to 21, **characterised in that** the control unit (1) is supplied with a reset signal by means of which a limit value ($G_{stat}$, $G_{dyn}$) is reset to a default value.

23. Method according to one of claims 5 to 22, **characterised in that** the present limit value ($G_{stat}$, $G_{dyn}$) or, as the case may be, the static and/or dynamic limit value as well as the present measured current value and/or the characteristic curve of the measured current value are/is indicated by means of a suitable display unit and/or output via an interface.

**Revendications**

1. Installation électrique comportant au moins un consommateur (4) sécurisé au moyen d'un dispositif de protection (S), un paramètre de déclenchement, en particulier un courant de déclenchement du dispositif de protection (S) pouvant être réglé, une unité de commande (1) étant prévue, à laquelle est amenée une valeur de mesure de courant du courant absorbé par l'au moins un consommateur (4) et l'unité de commande (1) générant, en fonction de l'évolution de la valeur de mesure de courant, une valeur limite ($G_{stat}$, $G_{dyn}$) qui est imposée au dispositif de protection (S) pour le réglage d'un paramètre de déclenchement, **caractérisée en ce que** l'au moins un consommateur (4) est alimenté au moyen d'une alimentation électrique cadencée réglée et **en ce que** le paramètre de déclenchement donné provoque, en cas d'erreur, un déclenchement du dispositif de protection avant que l'alimentation électrique cadencée ne passe à une limitation de courant.

**2.** Installation électrique selon la revendication 1, **caractérisée en ce que** l'unité de commande (1) comprend une première mémoire qui, déclenchée par une horloge, sauvegarde des valeurs de mesure de courant du consommateur (4).

**3.** Installation électrique selon la revendication 2, **caractérisée en ce que** l'unité de commande (1) comprend un microcontrôleur (8, $\mu$C) qui génère, à partir des valeurs de mesure de courant sauvegardées dans la première mémoire, à intervalles de temps donnés, une valeur limite ($G_{stat}$, $G_{dyn}$) qui est sauvegardée dans une deuxième mémoire et est amenée au dispositif de protection (S).

**4.** Installation électrique selon l'une des revendications 1 à 3, **caractérisée en ce que** le dispositif de protection (S) est réalisé en tant que dispositif de protection électronique commandé.

**5.** Procédé d'exploitation d'une installation électrique selon l'une des revendications 1 à 4, **caractérisé en ce que**, après l'expiration d'un intervalle de temps d'observation, la valeur de mesure de courant maximale (Î) survenue dans l'intervalle de temps d'observation est déterminée et **en ce qu'**il est, en outre, fait appel à la valeur de mesure de courant maximale conjointement avec au moins une valeur de mesure de courant maximale (Î) sauvegardée d'un intervalle de temps d'observation antérieur pour déterminer, sur cette base, la valeur limite ($G_{stat}$, $G_{dyn}$) pour le réglage du courant de déclenchement.

**6.** Procédé selon la revendication 5, **caractérisé en ce qu'**une tension d'alimentation ($U_{in}$) de l'au moins un consommateur (4) est amenée à l'unité de commande (1) et **en ce que** la valeur limite est déterminée en fonction de la hauteur de la tension d'alimentation ($U_{in}$) par spécification d'une valeur limite statique ($G_{stat}$) pendant le fonctionnement et spécification d'une valeur limite dynamique supérieure ($G_{dyn}$) lors d'une opération d'enclenchement de l'au moins un consommateur (4).

**7.** Procédé selon la revendication 5 ou 6, **caractérisé en ce que** la valeur de mesure de courant est filtrée avant la sauvegarde afin d'ignorer des pics de courant négligeables et des perturbations lors de la détermination d'une valeur de mesure de courant maximale (Î).

**8.** Procédé selon l'une des revendications 5 à 7, **caractérisé en ce qu'**est imposée à l'unité de commande (1) une durée réglable de l'intervalle de temps d'observation.

**9.** Procédé selon l'une des revendications 5 à 8, **caractérisé en ce que** la durée d'un intervalle de temps d'observation est fixée par saisie, dans un premier temps, de l'évolution des valeurs de mesure de courant pour identifier une suite récurrente de pics de consommation et de minima de consommation et par fixation, ensuite, d'un intervalle de temps d'observation de manière telle que respectivement un pic de consommation et respectivement un minimum de consommation se situent dans un intervalle de temps d'observation.

**10.** Procédé selon l'une des revendications 5 à 7, **caractérisé en ce que** la durée d'un intervalle de temps d'observation est déterminée par la survenance d'un nombre prédéterminable de dépassements d'une valeur seuil déterminée de la valeur de mesure de courant et/ou d'une intégrale courant-temps.

**11.** Procédé selon l'une des revendications 5 à 10, **caractérisé en ce que**, pour déterminer la valeur limite ($G_{stat}$, $G_{dyn}$), une réserve de sécurité (Res) est appliquée aux valeurs de mesure de courant maximales (Î) déterminées dans les intervalles de temps d'observation.

**12.** Procédé selon la revendication 11, **caractérisé en ce que** la réserve de sécurité (Res) est augmentée ou réduite selon une courbe prédéterminable au fur et à mesure que la durée de fonctionnement de l'installation électrique augmente.

**13.** Procédé selon la revendication 11 ou 12, **caractérisé en ce que** la valeur limite ($G_{stat}$) est spécifiée en tant que valeur moyenne des valeurs de mesure de courant maximales déterminées dans les intervalles de temps d'observation écoulés et auxquelles est appliquée la réserve de sécurité (Res).

**14.** Procédé selon la revendication 11 ou 12, **caractérisé en ce qu'**une nouvelle valeur limite ($G_{stat}$) est déterminée en tant que valeur moyenne de la valeur de mesure de courant maximale déterminée dans l'intervalle de temps d'observation qui a expiré en dernier lieu et de la valeur limite encore valable.

**15.** Procédé selon l'une des revendications 11 à 14, **caractérisé en ce que**, lors de la détermination de la valeur limite ($G_{stat}$), la valeur de mesure de courant maximale de l'intervalle de temps d'observation qui a expiré en dernier lieu est pondérée plus fortement que les valeurs des intervalles de temps d'observation qui ont expiré antérieurement.

**16.** Procédé selon la revendication 15, **caractérisé en ce que**, lors d'une augmentation des valeurs de mesure de courant maximales ($G_{stat}$) dans des intervalles de temps d'observation successifs, il y a pondération plus forte de la valeur de mesure de courant maximale survenue en dernier lieu qu'en cas de chute des valeurs de mesure de courant maximales.

**17.** Procédé selon l'une des revendications 6 à 16, **caractérisé en ce que**, pendant des surintensités autorisées, l'évolution de la valeur de mesure de courant est saisie et **en ce que**, en fonction de plusieurs telles évolutions, une évolution est spécifiée pour la valeur limite dynamique ($G_{dyn}$).

**18.** Procédé selon l'une des revendications 6 à 17, **caractérisé en ce qu'**est spécifiée, en tant que valeur limite dynamique ($G_{dyn}$), une intégrale courant-temps qui est dérivée de plusieurs évolutions de la valeur de mesure de courant pendant une opération d'enclenchement.

**19.** Procédé selon l'une des revendications 5 à 18, **caractérisé en ce que** la valeur limite ($G_{stat}$, $G_{dyn}$) et/ou l'évolution de la valeur limite ($G_{stat}$, $G_{dyn}$) sont limitées par une limite supérieure qui est spécifiée par les conditions de protection incendie des composants et/ou par leur capacité de performance qui sont subordonnées au dispositif de protection (S).

**20.** Procédé selon l'une des revendications 5 à 19, **caractérisé en ce qu'**une valeur critique est spécifiée pour l'augmentation d'une valeur limite ($G_{stat}$, $G_{dyn}$) et **en ce qu'**un signal d'alarme est déclenché en cas de dépassement de cette valeur critique.

**21.** Procédé selon l'une des revendications 5 à 20, **caractérisé en ce qu'**est amené à l'unité de commande (1) un signal externe au moyen duquel la durée des intervalles de temps d'observation est modifiée selon les circonstances.

**22.** Procédé selon l'une des revendications 5 à 21, **caractérisé en ce qu'**est amené à l'unité de commande (1) un signal de réinitialisation au moyen duquel est effectuée la remise d'une valeur limite ($G_{stat}$, $G_{dyn}$) à une valeur par défaut.

**23.** Procédé selon l'une des revendications 5 à 22, **caractérisé en ce que** la valeur limite actuelle ($G_{stat}$, $G_{dyn}$) resp. la valeur limite statique et/ou la valeur limite dynamique ainsi que la valeur de mesure de courant actuelle et/ou l'évolution de la valeur de mesure de courant sont produites en sortie au moyen d'une unité d'affichage appropriée et/ou via une interface.

FIG 1

FIG 2

FIG 3

FIG 4

$U_{in}$

3

10

1

9    13

S

14

4

FIG 5

3    5

$U_{in}$

S1

S2    R1

S3    R2

S4    R3

Sn    Rm

1

S

4

## FIG 6

## FIG 7

## FIG 8

```
┌──────────┐        ┌──────────┐
│    I     │        │   STG    │
└────┬─────┘        └────▲─────┘
     │                   │
     ▼                   │
┌──────────┐        ┌──────────┐
│    I'    │        │  SP(G)   │
└────┬─────┘        └────▲─────┘
     │                   │
     ▼                   │
┌──────────┐        ┌──────────┐              ┌──────────────┐
│   A/D    │        │          │◄─────────────│   ÜW(U_in)   │
└────┬─────┘        │          │              └──────────────┘
     │              │          │
     ▼              │          │
┌──────────┐  ◄──►  ┌──────────┐  ◄──────►   ┌──────────────┐
│  SP(Î')  │        │   μC     │              │  SP(G_hist)  │
└────┬─────┘        └──────────┘              └──────────────┘
     │  ▲                ▲  ▲  ▲
     │  │                │  │  │
     ▼  │                │  │  └──────────────┐
┌────────────────┐       │  │          ┌──────────────┐
│     CLOCK      │◄──────┘  └──────────│   1d/10sec   │
└────────────────┘                     └──────────────┘
```

## FIG 9

```
┌──────────┐                          ┌──────────┐        ┌──────────┐
│    I     │                          │  SP(G)   │───────►│   STG    │
└────┬─────┘                          └────▲─────┘        └──────────┘
     │                                     │
     ▼                  ┌────────┐   ┌──────────┐
┌──────────┐            │ +Res   │──►│ G_stat   │         G_dyn
│    I'    │            └───▲────┘   └──────────┘          │
└────┬─────┘                │                              │
     │                      │                              │
     ▼                      │                       ┌──────────────┐
┌──────────┐ ◄──────────────┼──────●────────────●──│   ÜW(U_in)   │
│  SP(Î')  │                │      │            │   └──────────────┘
└────┬─────┘                │      ▼            │
     │             ┌────────────────┐   ┌──────────────┐
     ▼        ┌───►│      MW        │──►│   DETECT     │
┌──────────┐  │    └────────────────┘   └──────────────┘
│ SP(Hist) │──┤            │
└────┬─────┘  │    ┌────────────────┐
     │        └───►│      Red       │
     │             └────────────────┘
     ▼
┌──────────┐      ÜW(Intv)
│   I/t    │──────────────┐
└──────────┘              ▼
┌────────────────┐  ┌──────────────┐
│     CLOCK      │◄─│   1d/10sec   │
└────────────────┘  └──────────────┘
```

**IN DER BESCHREIBUNG AUFGEFÜHRTE DOKUMENTE**

**In der Beschreibung aufgeführte Patentdokumente**

- US 5512883 A
- US 5245496 A